Europäisches Patentamt

(19) European Patent Office

Office européen des brevets

(11) Publication number: **0 055 523**
**B1**

## (12) EUROPEAN PATENT SPECIFICATION

(45) Date of publication of patent specification: **17.04.85**

(21) Application number: **81305629.8**

(22) Date of filing: **27.11.81**

(51) Int. Cl.⁴: **B 60 N 1/06, A 47 C 1/026**

(54) **An adjustable recline-control mechanism for furniture and furniture comprising the mechanism.**

(30) Priority: **31.12.80 GB 8041570**

(43) Date of publication of application:
**07.07.82 Bulletin 82/27**

(45) Publication of the grant of the patent:
**17.04.85 Bulletin 85/16**

(84) Designated Contracting States:
**DE FR GB IT**

(56) References cited:
**DE-A-2 454 190**
**GB-A- 892 398**
**GB-A-2 044 341**
**US-A-1 821 429**
**US-A-4 153 296**

(73) Proprietor: **IMPERIAL CHEMICAL INDUSTRIES PLC**
**Imperial Chemical House Millbank**
**London SW1P 3JF (GB)**

(72) Inventor: **Robinson, James Derek**
**3 The Jinnings Welwyn Garden City**
**Hertfordshire (GB)**

(74) Representative: **Rhind, John Lessels et al**
**Imperial Chemical Industries PLC Legal**
**Department: Patents PO Box 6**
**Welwyn Garden City Herts, AL7 1HD (GB)**

Courier Press, Leamington Spa, England.

## Description

This invention relates to an adjustable recline-control mechanism suitable for use in furniture of the kind comprising a carrier, such as a seat or bed for an occupant of the furniture, and a reclinable support such as a back-rest or an arm-rest, which is adjustably reclinable so that its angle of recline relative to the carrier can be adjusted to the needs of an occupant. The invention also relates to furniture comprising such a recline-control mechanism.

Reclinable supports often receive thrusts from an occupant. For example if a motor vehicle containing seats of the aforementioned kind rides over a bump in the road, a seated occupant may bounce on the seat and be thrown against the back-rest. A thrust applied to the top of the back-rest exerts a powerful moment against the recline-control mechanism because of the leverage afforded by the length of the back-rest. The power of the moment poses risks. Firstly the recline-control mechanism may break. Secondly an adjustable recline-control mechanism may be caused to jump out of controlling engagement because the adjustable mechanisms are designed to be easily disengaged and re-engaged in alternative positions to bring about the adjustment of the angle of recline of the reclinable support.

A commercial recline-control mechanism employs weight-biased latching means comprising a metal link pivotally connected to a reclinable support about a horizontal axis parallel to the axis of reclining of the support. Hence the link travels in response to adjustment of the angle of recline of the support and so this angle can be controlled by preventing travel of the link. This is effected by a downward projection provided on the link and which is biassed by the weight of the link into latching engagement between a pair of teeth belonging to a row of teeth fixed to a carrier. Abutment of the projection against a tooth prevents travel of the link. Adjustment is brought about by engaging the projection between an alternative pair of teeth. Only the weight of the link and frictional forces are available to prevent the link jumping out of engagement and the effective weight of the link may be momentarily reduced if the carrier is momentarily deformed downwards by a bouncing occupant whereupon the link may be disengaged. In addition, the link, if it is fabricated from plastics material, may not be of sufficient weight and the coefficient of friction between plastics surfaces will be low.

We have now devised an improved adjustable recline-control mechanism.

Accordingly this invention provides for use in furniture of the type comprising a carrier (such as a seat or bed for an occupant) and a reclinable support (such as a back-rest or arm-rest) which is adjustably reclinable relative to the carrier, an adjustable recline-control mechanism comprising

a) a link connectable pivotally to a reclinable support about an axis parallel to the axis of reclining of the support so that when so connected the link would travel in response to adjustment of the angle of recline of the support and

b) latching means for controlling the travel of the link and hence the angle of recline of a support connected to the link, the latching means comprising fixed and displaceable latching members, any fixed members when in use being fixed relative to a carrier and any displaceable members being secured to and displaceable with the link and wherein the fixed and displaceable members when in use are primarily biassed towards inter-latching and are inter-latchable in alternative positions so as to prevent travel of the link and so control the angle of recline of a connected support in one or other alternative positions. Such a control mechanism is disclosed in US—A—1821429.

The control mechanism according to the invention is, however, characterised in that its latching means comprises at least first and second latching portions, the first latching portion being arranged to prevent travel of the link in a first direction and the second latching portion being arranged to prevent travel of the link in the opposite direction and wherein when in use the latching portions are spaced relative to the axis of pivotting of the link such that the force each latching portion creates in preventing travel of the link exerts a moment on the link which acts as an auxiliary bias towards inter-latching of the fixed and displaceable members.

Because the second portion controls the travel of the link in a manner which is the reverse of the control exercised by the first portion, it is possible to enable forces in opposite directions to produce the auxiliary bias by spacing the portions relative to the axis of pivotting of the link in such a way that the lines of action of forces in opposite directions pass on opposite sides of the axis and hence both a thrust applied to the front of a reclinable support and a thrust applied to its back can be utilised to provide the auxiliary bias.

Although the primary bias may be provided by resilient biasing means alone, the link is preferably connectable to a reclinable support about a horizontal axis so that the primary bias towards inter-latching is provided by the weight of the link supplemented by a spring if required. Such a link is suitably fabricated from plastics material. It is preferred to fabricate at least one of the portions of the inter-latchable members from plastics materials because they can then be easily mass-produced in complex curves which match the path traced by the displaceable latching members as they travel with the link so permitting a better register between inter-latching members in at least some of the alternative latching positions. Preferably the fixed latching members are moulded integrally with the carrier and the displaceable members are moulded integrally with the link. The preferred plastics materials are thermoplastics materials optionally reinforced with fibre such as glass fibre. Preferred thermoplastics are polyamides and crystalline polyolefins, especially homopolymers and copolymers of propylene. The plastics material may be in the form of either a solid moulding or a structural foam, that is — a structure comprising a foamed core enclosed within a solid skin.

The invention is illustrated by reference to the drawings in which

Figure 1 is a section on a central line of symmetry through part of a seat for a motor vehicle, the seat incorporating an adjustable recline-control mechanism,

Figure 2 is a perspective view on a smaller scale of part of the seat frame and fixed teeth shown in Figure 1,

Figure 3 is a perspective view on a larger scale of the link shown in Figure 1,

Figures 4(a) and 4(b) are schematic sections of an interlatching tooth arrangement, and

Figure 5 is a sectional view on a central line of symmetry of a motor vehicle seat frame with an adjustable recline-control mechanism incorporating an alternative arrangement of inter-latching teeth.

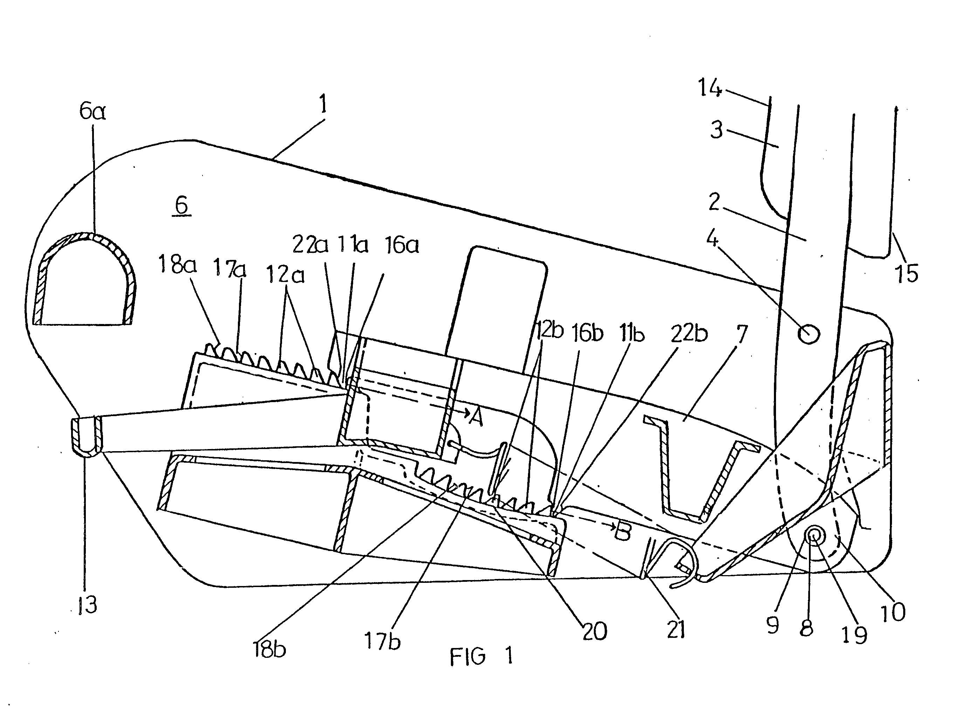

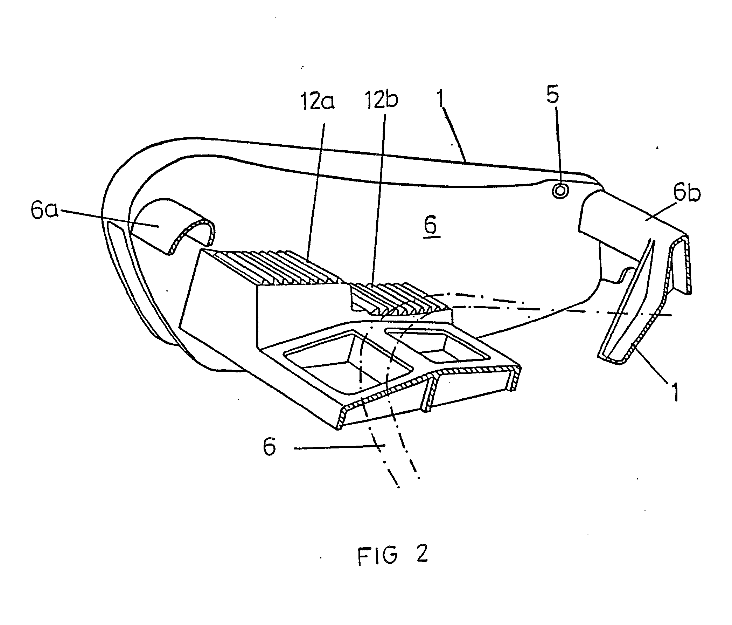

Figure 1 shows a seat for a motor vehicle, the seat comprising a smooth moulded plastics seat frame 1 from which upwardly extend a pair of opposed metal supports 2 (only one of which is shown) for a smooth moulded plastics reclinable back-rest 3, supports 2 being mounted pivotally on seat frame 1 by means of a horizontal metal pivot 4 journalled into bearings 5 provided in opposed side walls 6 (only one of which is shown) of seat frame 1. Opposed side walls 6 are linked by appropriate structural cross members 6a, 6b (see Figure 2).

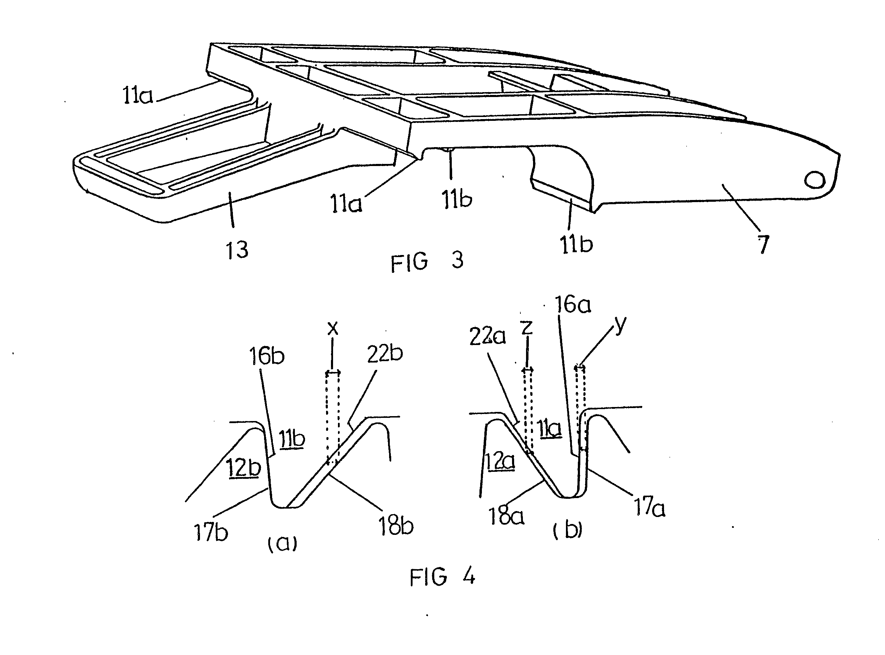

The angle at which each support 2, and thus back-rest 3, reclines relative to seat frame 1 is controllable by means of smooth moulded link 7 (also shown in Figure 3 in perspective). Link 7 is pivotally connected to support 2 by metal pivot 8 which is parallel to pivot 4 and is journalled into metal bushed bearings 9 formed in the lower ends 10 of supports 2 so that link 7 travels back or forth as the angle of recline of support 2 is adjusted. By controlling travel of link 7 it is possible to control support 2, and thus back-rest 3, in a chosen angle of recline. Travel of link 7 is controllable by allowing the weight of link 7 to bias generally downwardly projecting teeth 11a and 11b moulded integrally with link 7 into inter-latching engagement with one or other of alternative first and second generally upwardly projecting ratchet teeth 12a and 12b which are moulded integrally with, and hence fixed relative to seat frame 1. Effectively, therefore, teeth 11a and 12a together constitute a first interlatching portion of the mechanism and teeth 11b and 12b together constitute a second interlatching portion of the mechanism. Because ratchet teeth 12a and 12b are fixed relative to seat frame 1, such inter-latching prevents travel of link 7 relative to seat frame 1 and so also holds support 2 in a chosen angle of recline relative to seat frame 1. The angle of recline is easily adjusted by manually lifting link 7 by means of handle 13 to disengage teeth 11a, 11b, 12a and 12b, shifting link 7 and then allowing it to fall and re-engage teeth 11a and 11b with other teeth 12a or 12b.

In addition, the inter-latching of teeth 11a, 11b, 12a and 12b does not serve merely to control travel of link 7 and the angle of recline of support 2. It also serves to transduce the force of a thrust on back-rest 3, and thus on support 2, into moments on link 7 which bias link 7 towards inter-latching irrespective of whether the thrust is applied to the front 14 or back 15 of back-rest 3. This is achieved by the choice of spacing and ratchet configuration of teeth 11a, 11b, 12a and 12b as follows:

Downwardly projecting teeth 11a and 11b are formed with flat thrust faces 16a and 16b at least approximately parallel to a plane tangential to pivot 8 and upwardly projecting teeth 12a and 12b are formed with flat thrust faces 17a and 17b which register with flat thrust faces 16a and 16b when teeth 11a, 11b, 12a and 12b are interlatched. Flat faces 16a and 17b face towards pivot 8 whereas flat faces 16b and 17a face away from pivot 8. Hence rearward travel of link 7 relative to seat frame 1 (i.e. towards the right as depicted in the drawings) is prevented by abutment of flat face 16a against flat face 17a. Should a rearward thrust on back-rest 3 tend to disengage link 7, the ratchet configuration of teeth 12a, and particularly the relative positions of opposed slidable reverse faces 18a, 22a accommodates the small forward displacement of link 7 required to bring the corresponding thrust faces 16b, 17b more firmly into contact whereby further displacement of link 7 is prevented and the tendency of link 7 to travel forwardly (i.e. to the left as depicted in the drawings) does not impart significant sustainable force against teeth 12a. Likewise, abutment of flat faces 16b and 17b and the presence of inclined, reverse, slidable surfaces 18b of teeth 12b prevent forward travel of link 7 while ensuring that any tendency of link 7 to disengage and travel rearwardly does not impart significant sustainable force on teeth 12b. The force created by abutment of flat face 16a against a flat face 17a and the force created by abutment of flat face 16b against a flat face 17b both exert a moment on link 7 which provides an auxiliary bias of link 7 towards inter-latching despite the fact that these forces act in opposite directions. This is possible for two reasons. Firstly teeth 12a are spaced relative to axis 19 of pivot 8 such that the line of action (indicated by arrow A in Figure 1) of a force created on any flat face 17a by abutment of flat face 16a passes over axis 19 whereas teeth 12b are spaced relative to axis 19 such that the line of action (indicated by arrow B) of a force created on any flat face 17b by flat face 16b passes under axis 19 whereupon not only those forces on link 7 acting forwardly via teeth 12a but also those forces acting rearwardly via teeth 12b exert a counter-clockwise (as seen in Figure 1) moment on link 7. Secondly, as hereinbefore described, opposite forces are prevented from exerting any significant sustainable moment on link 7. Hence forces created by resistance to travel of link 7 in response to a thrust applied to the front or back of back-rest 3 produce a moment which biasses link 7 towards inter-latching irrespective of the direction of the thrust and the consequent line of action of the force exerted on a tooth 12a or 12b. This enables less reliance to be placed on the primary bias towards inter-latching provided by the weight of link 7 and avoids the need to rely on frictional resistance to unlatching. In particular, successful fabrication of a recline-control mechanism from smooth light-weight plastics materials becomes possible.

Row 20 of teeth 12b is fashioned in a gentle curve and the inclination of each flat face 17b is chosen to be orthogonal to the curve so as to match the path traced by tooth 11b as it travels. This matching leads to more positive engagement between teeth 11b and 12b. Such a curvature and variation in the inclination of flat faces 17b would be expensive and difficult to achieve using conventional metal-forming techniques.

If desired, the primary inter-latching bias provided by the weight of link 7 can be supplemented by metal spring 21. Spring 21 also serves to bias back-rest 3 to an upright position.

In order to avoid harmful clockwise moments being imparted to link 7, inclined, reverse surfaces 18a and 18b on teeth 12a and 12b may, if desired, be formed so as to allow a small clearance between them and the corresponding inclined, reverse surfaces 22a and 22b on teeth 11a and 11b. A preferred arrangement is depicted in Figure 4 in which the teeth of a first interlatching portion of the control mechanism (Figure 4a) are dimensioned and arranged so that when the flat thrust faces 16b and 17b of teeth 11b and 12b are in contact the clearance "x" (measured in a plane substantially normal to the contacting flat faces) between inclined faces 18b, 22b is greater than the clearance "y" between opposed flat faces 16a, 17a and is also greater than the clearance "z" between opposed inclined faces 18a, 22a of the corresponding second interlatching portion (Figure 4b) of the mechanism. Effectively, the preferred arrangement of interlatching teeth is such that $x = y + z$.

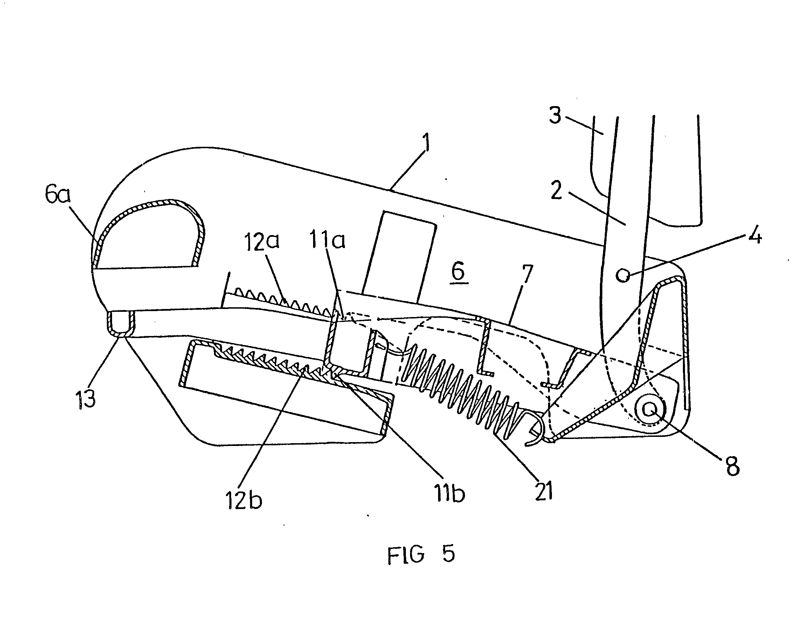

In the alternative arrangement of Figure 5 in which like parts are identified by like reference numerals, the teeth 11a, 11b of respective first and second displaceable latching portions of link 7, instead of being radially spaced apart from each other relative to pivot 8 (as in the embodiment of Figure 1), are located in a plane substantially parallel to a plane tangential to pivot 8. Correspondingly, the teeth 12a, 12b of the respective fixed interlatching portions are equidistantly radially spaced from pivot 8, the respective first and second portions being arcuately spaced apart on an imaginary circle centred on pivot 8 so that a projection normal to the flat thrust faces of the respective sets of teeth passes on either side of pivot 8 whereby the forces generated by displacement of back-rest 3 exert the desired counter-clockwise auxiliary biassing moment on link 7.

Although the illustrated specific embodiments are herein described in terms of each latching portion comprising a single displaceable tooth engageable with each of a plurality of spatially fixed teeth, it will be appreciated that each displaceable latching component may comprise a plurality of teeth engageable with a fixed component comprising a single tooth or projection. Likewise, although the herein disclosed teeth are of ratchet form, each tooth having a flat thrust face and an inclined slidable face, teeth of other configurations (e.g. of rectangular cross-section) may be employed.

The adjustable recline-control mechanism of the invention does not rely solely on the weight and frictional characteristics of its component parts, but also utilises incidental forces generated in one or more of the components during usage of the mechanism to exert an auxiliary bias moment which helps to retain the latching members in interlatching engagement. The mechanism is therefore suitable for fabrication in light weight materials, such as polymeric plastics, and is particularly suitable for incorporation into automobile seats. The mechanism is also of utility in items of furniture such as chairs, settees (with inclinable end portions) and beds, and is particularly suitable for incorporation into items of garden furniture for which the low density, strength and corrosion-resistant characteristics of polymeric structural plastics are particularly suitable.

**Claims**

1. For use in furniture of the type comprising a carrier (1) and a reclinable support (2) which is adjustably reclinable relative to the carrier (1), an adjustable recline-control mechanism comprising

a) a link (7) connectable pivotally to a reclinable support (2) about an axis (19) parallel to the axis (4) of reclining of the support (2) so that when so connected the link (7) would travel in response to adjustment of the angle of recline of the support (2) and

b) latching means for controlling the travel of the link (7) and hence the angle of recline of a support (2) connected to the link (7), the latching means comprising fixed and displaceable latching members (11a, 11b, 12a, 12b), any fixed members (12a, 12b) when in use being fixed relative to a carrier (1) and any displaceable members (11a, 11b), being secured to and displaceable with the link (7) and wherein the fixed and displaceable members when in use are primarily biassed towards inter-latching and are inter-latchable in alternative positions so as to prevent travel of the link (7) and so control the angle of recline of a connected support (2) in one or other alternative positions, the control mechanism being characterised in that its latching means comprises at least first (11a, 12a) and second (11b, 12b) latching portions, the first latching portion being arranged to prevent travel of the link (7) in a first direction and the second latching portion being arranged to prevent travel of the link (7) in the opposite direction and wherein when in use the latching portions are spaced relative to the axis (19) of pivotting of the link (7) such that the force each latching portion creates in preventing travel of the link (7) exerts a moment on the link (7) which acts as an auxiliary bias towards interlatching of the fixed (12a, 12b) and displaceable members (11a, 11b).

2. A mechanism according to claim 1 wherein each latching portion comprises a fixed tooth array (12a, 12b) and a displaceable toothed array (11a, 11b) cooperable therewith.

3. A mechanism according to claim 2 wherein at least one of each cooperable fixed and displaceable toothed arrays comprises a plurality of teeth.

4. A mechanism according to either of claims 2 and 3 wherein a tooth of each array comprises a thrust face (16a, 16b, 17a, 17b), and a reverse face, the teeth comprising the first and second latching portions being arranged so that projections normal to a thrust face in each of said latching portions pass respectively on opposite sides of axis (19).

5. A mechanism according to claim 4 wherein the teeth are dimensioned and arranged such that on engagement of the respective cooperable thrust faces (16b, 17b) in the first latching portion, a clearance exists between the respective cooperable thrust faces (16a, 17a) and between the respective cooperable reverse faces (18a, 22a) in the second latching portion.

6. A mechanism according to any one of the preceding claims wherein at least one portion of the latching means is produced in a curve which matches the path traced by the at least one displaceable latching member (11a or 11b).

7. A mechanism according to any one of the preceding claims wherein the mechanism is fabricated from a thermoplastics material.

8. Furniture comprising a mechanism as claimed in any one of the preceding claims.

9. A seat for a motor vehicle wherein the seat comprises a back-rest support (2) which can be reclined relative to a seat frame (1) characterised in that the angle of recline of the back-rest support (2) is controlled by means of a mechanism as claimed in any one of claims 1 to 7.

## Patentansprüche

1. Verstellbarer Neigungssteuermechanismus zur Anwendung bei einem Möbel der Bauart mit einem Tragteil (1) und einem in seiner Neigung verstellbaren Stützteil (2), das in seiner Neigung zum Tragteil (1) verstellbar ist, aus

a) einem Übertragungsarm (7), der verdrehbar um eine Achse (19) parallel zur Achse (4) der Neigungsverstellung des Stützteils (2) derart mit einem in seiner Neigung verstellbaren Stützteil (2) verbindbar ist, daß bei einer solchen Verbindung der Übertragungsarm (7) als Reaktion auf eine Verstellung des Neigungswinkels des Stützteils (2) wandert, und

b) Sperrmittel zur Steuerung des Laufs des Übertragungsarms (7) und damit des mit dem Übertragungsarm (7) verbundenen Stützteils (2), wobei die Sperrmittel feste und verschiebbare Sperrelemente (11a, 11b, 12a, 12b) aufweisen, wobei alle festen Elemente (12a, 12b) in Gebrauch relativ zu einem Tragteil (1) fest sind und alle verschiebbaren Elemente (11a, 11b) an dem Übertragungshebel (7) befestigt und mit diesem verschiebbar sind, und wobei die festen und verschiebbaren Elemente in Gebrauch zunächst in Richtung auf eine gegenseitige Sperrstellung vorgespannt sind und in verschiedenen Stellungen einander sperren können, um so die Wanderung des Übertragungsarms (7) zu verhindern und so den Neigungswinkel des verbundenen Stützteils (2) in die eine oder andere verschiedene Stellung zu steuern, wobei der Steuermechanismus dadurch gekennzeichnet ist, daß seine Sperrmittel zumindest erste (11a, 12a) und zweite Sperrabschnitte (11b, 12b) umfassen, wobei die ersten Sperrabschnitte derart angeordnet sind, daß sie die Wanderung des Übertragungsarms (7) in eine erste Richtung verhindern, und die zweiten Sperrabschnitte derart angeordnet sind, daß sie eine Wanderung des Übertragungshebels (7) in die entgegengesetzte Richtung verhindern, und wobei die in Gebrauch stehenden Sperrabschnitte einen Abstand zur Anlenkachse (19) des Übertragungsarms (7) aufweisen, so daß die von jedem Sperrabschnitt zur Vermeidung der Wanderung des Übertragungsarms (7) erzeugte Kraft ein Drehmoment auf den Übertragungsarm (7) ausübt, das als Hilfsvorspannung in Richtung auf die gegenseitige Sperrstellung der festen (12a, 12b) und verschieblichen Elemente (11a, 11b) wirkt.

2. Mechanismus nach Anspruch 1, bei dem jeder Sperrabschnitt eine feste Zahnreihe (12a, 12b) und eine verschiebbare Zahnreihe (11a, 11b) aufweist, die miteinander verbindbar sind.

3. Mechanismus nach Anspruch 2, bei dem zumindest eine der in Eingriff bringbaren festen und verschiebbaren Zahnreihen eine Vielzahl Zähne aufweist.

4. Mechanismus nach Anspruch 2 oder 3, bei dem ein Zahn jeder Reihe eine Druckfläche (16a, 16b, 17a, 17b) und eine Hinterfläche aufweist, wobei die Zähne der ersten und zweiten Sperrabschnitte derart angeordnet sind, daß zu einer Druckfläche senkrecht stehende Vorsprünge in jedem der Sperrabschnitte jeweils auf entgegengesetzten Seiten der Achse (19) laufen.

5. Mechanismus nach Anspruch 4, bei dem die Zähne derart dimensioniert und angeordnet sind, daß bei Eingriff der zugeordneten zusammenwirkenden Druckflächen (16b, 17b) im ersten Sperrabschnitt zwischen den zugeordneten zusammenwirkenden Druckflächen (16a, 17a) und zwischen den zugeordneten zusammenwirkenden Hinterflächen (18a, 22a) im zweiten Sperrabschnitt ein Spalt besteht.

6. Mechanismus nach einem der vorangehenden Ansprüche, bei dem zumindest ein Abschnitt des Sperrmittels mit einer Biegung hergestellt ist, die dem von zumindest einem verschieblichen Sperrelement (11a oder 11b) bestrichenen Weg entspricht.

7. Mechanismus nach einem der vorangehenden Ansprüche, bei dem der Mechanismus aus einem thermoplastischen Material hergestellt ist.

8. Möbelstück, daß einen in einem der vorangehenden Ansprüche beanspruchten Mechanismus enthält.

9. Kraftfahrzeugsitz, bei dem der Sitz eine Rückenlehne (2) aufweist, die bezüglich eines Sitzteils (1) geneigt werden kann, dadurch gekennzeichnet, daß der Neigungswinkel der Rückenlehne (2) durch Elemente eines in einem der Ansprüche 1 bis 7 beanspruchten Mechanismus gesteuert wird.

## Revendications

1. Mécanisme de commande d'inclinaison réglable destiné à être utilisé dans un meuble du type comprenant un élément porteur (1) et un support inclinable (2) dont l'inclinaison peut être réglée par rapport à l'élément porteur (1), comprenant

a) une biellette (7) pouvant être reliée à un support inclinable (2) de façon à pouvoir pivoter autour d'un axe (19) parallèle à l'axe (4) d'inclinaison du support (2) de façon que, lorsqu'elle est ainsi reliée, la biellette (7) se déplace en réponse à un réglage de l'angle d'inclinaison du support (2), et

b) des moyens de verrouillage destinés à limiter la course de la biellette (7) et donc l'angle d'inclinaison d'un support (2) relié à la biellette (7), les moyens de verrouillage comprenant des éléments de verrouillage fixes et mobiles (11a, 11b, 12a, 12b), tous éléments fixes (12a, 12b), lorsqu'ils sont utilisés, étant fixes par rapport à un élément porteur (1) et tous éléments mobiles (11a, 11b) étant assujettis à la biellette (7) et mobiles avec la biellette (7), et dans lequel les éléments fixes et mobiles, lorsqu'ils sont utilisés, sont sollicités principalement vers un verrouillage mutuel et peuvent être verrouillés entre eux dans des positions différentes afin d'empêcher le déplacement de la biellette (7) et de limiter ainsi l'angle d'inclinaison d'un support relié (2) dans l'une ou l'autre des positions différentes, le mécanisme de commande étant caractérisé en ce que ses moyens de verrouillage comprennent au moins des première (11a, 12a) et seconde (11b, 12b) parties de verrouillage, la première partie de verrouillage étant agencée de façon à empêcher le déplacement de la biellette (7) dans un premier sens et la seconde partie de verrouillage étant agencée afin d'empêcher le déplacement de la biellette (7) dans le sens opposé, et dans lequel, lors de l'utilisation, les parties de verrouillage sont espacées par rapport à l'axe (19) de pivotement de la biellette (7) afin que la force que chaque partie de verrouillage engendre pour empêcher le déplacement de la biellette (7) exerce un moment sur la biellette (7) qui agit comme sollicitation auxiliaire vers le verrouillage mutuel des éléments fixes (12a, 12b) et mobiles (11a, 11b).

2. Mécanisme selon la revendication 1, dans lequel chaque partie de verrouillage comprend une rangée de dents fixes (12a, 12b) et une rangée de dents mobiles (11a, 11b) coopérant avec elles.

3. Mécanisme selon la revendication 2, dans lequel au moins l'une de chacune des rangées coopérantes de dents fixes et mobiles comprend plusieurs dents.

4. Mécanisme selon l'une des revendications 2 et 3, dans lequel une dent de chaque rangée comprend une face de poussée (16a, 16b, 17a, 17b) et une face opposée, les dents constituant les première et seconde parties de verrouillage étant agencées de façon que des saillies, perpendiculaires à une face de poussée de chacune desdites parties de verrouillage, passent respectivement sur les côtés opposés de l'axe (19).

5. Mécanisme selon la revendication 4, dans lequel les dents sont dimensionnées et agencées de manière que, lors de l'entrée en prise des faces coopérantes respectives de poussée (16b, 17b) de la première partie de verrouillage, un jeu existe entre les faces coopérantes respectives de poussée (16a, 17a) et entre les faces arrière coopérantes respectives (18a, 22a) de la seconde partie de verrouillage.

6. Mécanisme selon l'une quelconque des revendications précédentes, dans lequel au moins une partie des moyens de verrouillage est produite sur une courbe qui correspond au trajet tracé par l'élément mobile de verrouillage (11a ou 11b).

7. Mécanisme selon l'une quelconque des revendications précédentes, dans lequel le mécanisme est fabriqué à partir d'une résine thermoplastique.

8. Meuble comprenant un mécanisme selon l'une quelconque des revendications précédentes.

9. Siège pour véhicule à moteur dans lequel le siège comprend un support (2) de dossier qui peut être incliné par rapport à une assise (1), caractérisé en ce que l'angle d'inclinaison du support (2) de dossier est commandé au moyen d'un mécanisme selon l'une quelconque des revendications 1 à 7.

FIG 1

0 055 523

FIG 2

11a

11a    11b

13        FIG 3    11b    7

16b        x    22b

16a

22a  z        y

12b    11b

17b    (a)    18b

11a

12a

18a    (b)    17a

FIG 4

FIG 5

0 055 523